(19) Europäisches Patentamt

European Patent Office

Office européen des brevets

(11) **EP 4 718 321 A1**

(12) **EUROPEAN PATENT APPLICATION**

(43) Date of publication:
**01.04.2026 Bulletin 2026/14**

(21) Application number: **25189818.5**

(22) Date of filing: **16.07.2025**

(51) International Patent Classification (IPC):
*G06N 3/045* (2023.01)        *G06N 3/0455* (2023.01)
*G06N 3/0475* (2023.01)        *G10L 15/16* (2006.01)
*G10L 25/30* (2013.01)        *G10L 25/51* (2013.01)

(52) Cooperative Patent Classification (CPC):
**G10L 15/16; G06N 3/045; G06N 3/0455;
G06N 3/0475; G10L 25/30; G10L 25/51**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.09.2024 US 202418896557**

(71) Applicant: **INTEL Corporation
Santa Clara, CA 95054 (US)**

(72) Inventor: **Lopatka, Kuba
80-288 Gdansk (PL)**

(74) Representative: **Goddar, Heinz J.
Boehmert & Boehmert
Anwaltspartnerschaft mbB
Pettenkoferstrasse 22
80336 München (DE)**

(54) **MULTIMODAL LARGE LANGUAGE MODEL WITH AUDIO TRIGGER**

(57)    Systems and methods to trigger LLM inference based on the presences of relevant audio, such as a keyword or sound event of interest. A detection head receives acoustic embeddings from an audio encoder and determines whether the audio stream includes relevant sounds (e.g., a selected audio trigger). When the audio stream does not include relevant sounds, multimodal LLM inference is bypassed, thereby saving power and protecting privacy. When relevant sounds are detected in the audio stream by the detector, the acoustic embeddings from the audio encoder are transmitted to the multimodal LLM, which proceeds to perform inference on the acoustic embeddings. The audio encoder and/or detection head can be offloaded in the hardware and implemented before the multimodal LLM in the hardware pipeline, while the multimodal LLM can be implemented in a neural processing unit.

**EP 4 718 321 A1**

**Description**

<u>Technical Field</u>

This disclosure relates generally to deep learning, and more specifically, large language models having an audio trigger.

<u>Background</u>

The last decade has witnessed a rapid rise in AI (artificial intelligence) based data processing, including advances in large language models (LLMs) designed to understand and generate human language. Large language models can be implemented using a deep learning system, such as a neural network having many layers. LLMs can be configured to understand and answer user questions and/or understand instructions and perform various tasks, and LLMs can analyze both audio and image input. However, constant analysis of ambient audio by an LLM can present privacy concerns. Additionally, LLMs use a large amount of compute power, often consuming the entire bandwidth of the neural processing unit (NPU).

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an example deep learning system, in accordance with various embodiments.
FIGS. 2A-2D illustrate example systems including a multimodal LLM with an audio trigger, in accordance with various embodiments.
FIG. 3 illustrates an example system including a detection head for identifying an audio trigger, in accordance with various embodiments.
FIG. 4 is a flow chart illustrating an example method for a multimodal LLM with an audio trigger, in accordance with various embodiments.
FIG. 5 illustrates an example transformer model, in accordance with various embodiments.
FIG. 6 illustrates an embedding operation in an embedding layer, in accordance with various embodiments.
FIG. 7 is a block diagram of an example computing device, in accordance with various embodiments.

<u>Detailed Description</u>

*Overview*

LLMs are a type of neural network designed to understand and generate language. Multimodal LLMs can reason from multiple modalities, including, for example, audio, text, and/or images. An audio signal can be encoded into audio tokens, and, in various examples, the audio tokens can be concatenated with text tokens (and/or image tokens) and processed by an LLM. In general, multimodal LLMs are continuously executed to listen for relevant audio which consumes excessive amounts of energy. Additionally, a continuously executing multimodal LLM constantly analyzes sound in its environment which can pose privacy concerns.

Systems and methods are provided herein to trigger multimodal LLM inference based on the presence of relevant audio, such as a keyword or sound event of interest. Keyword spotting and acoustic event detection are techniques used to filter out irrelevant audio and bypass power hungry processing. However, traditional systems and methods for keyword spotting and acoustic event detection, such as a voice activity detector and a keyword spotting algorithms, utilize additional hardware in the hardware pipeline before data is sent to the multimodal LLM. In some examples, the hardware used for keyword spotting and acoustic event detection systems use at least 100-200 KB of memory per model. Furthermore, these systems introduce additional complexity to the pipeline, including multiple stages of detection. In contrast, the systems and method provided herein add about 5-10 KB of memory and minimal compute resources to the multimodal LLM pipeline.

Another disadvantage of traditional systems and methods for keyword spotting and acoustic event detection that use 100-2200 KB per model is that these systems support detection of predefined sounds. Traditional systems and methods for supporting zero-shot keyword spotting and acoustic event detection consume over one MB of memory per model. Zero-shot detection is the ability of a multimodal LLM to detect and classify an audio trigger without specific training on the audio trigger. In contrast, systems and methods are provided herein to achieve superior accuracy of zero-shot detection of user-defined audio (e.g., keywords or sounds) and add only about 5-10 KB of memory.

According to various implementations, systems and methods are provided to process audio tokens at a detection head, where the audio tokens are produced by an audio encoder branch of a multimodal LLM. The detection head determines whether the audio stream includes relevant sounds (e.g., a selected audio trigger). When the audio stream does not include relevant sounds, multimodal LLM inference is bypassed, thereby saving power and protecting privacy. When relevant sounds are detected in the audio stream by the detector, multimodal LLM inference proceeds on the audio stream. In some implementations, the audio encoder and/or detection head can be offloaded in the hardware and implemented before the multimodal LLM in the hardware pipeline. In some implementations, the systems and methods provided herein for identifying an audio trigger utilize acoustic embeddings from a transformer, which are the same as the acoustic embeddings used in the multimodal LLM.

Bypassing multimodal LLM inference until selected audio is detected results in substantial power and energy savings over constantly performing inference at the multimodal LLM. In particular, multimodal LLM inference consumes most to all of the processing bandwidth of the neural processing unit (NPU). In contrast running the audio encoder and the detection head in hardware consumes less than 100 mW of power, which is minimal compared to total processing power and likely not noticeable to a user. Additionally, bypassing multimodal LLM inference increases privacy of users in the ambient environment, such that user conversations are protected from being analyzed without user consent since multimodal LLM inference is not initiated until a certain trigger sound is detected. Furthermore, the detection head used for trigger sound detection can be configured by a user (or an OEM) to react to a selected keyword (e.g., a proper name) or a specific sound (e.g., a door knock), eliminating tuning of models post-silicon.

Large Language Models (LLMs), including transformer-based neural networks like GPT (Generative Pre-trained Transformer) and BERT (Bidirectional Encoder Representations from Transformers) are used for Natural Language Processing (NLP) in various applications, from virtual assistants, document summarization, to coding assistants, language translation and speech recognition apps. Despite the remarkable capabilities of LLMs, deploying them and executing LLM inference on end user devices with DNN accelerators is not trivial due to their high computational intensity, expensive memory requirements, dynamic nature of input and output shapes, large sequence lengths, in addition to the inherent autoregressive nature of LLM generation stage. Multimodal LLMs can include additional requirements and use additional computational resources.

The demand for computational resources during LLM inference depends on numerous factors, including LLM model architecture, number of parameters, and application. The term "large" in LLM signifies the scale of these models, encompassing both the extensive number of model parameters (weights), often reaching scales of billions of parameters, and the vast corpus of training data. In addition, the number of floating-point operations (FLOPs) is primarily determined by the input sequence length and the model size. The compute complexity of the MHA module in encoder and decoder scales quadratically with the input sequence length. Also, substantial portions of text may result in potentially thousands of words/tokens (e.g., in content summarization) leading to high sequence length, which leads to high compute demand. This challenge results in high inference latency and high energy consumption.

LLMs usually exhibit a substantial memory footprint, stemming from the need to store extensive pre-trained model parameters (in billions) and maintain transient states during autoregressive generation phase, particularly during decoder with KV cache inference (cached inference) phase. These voluminous parameters not only surpass the capacity of standard device memory but also pose bottlenecks to the generation throughput. This challenge also impacts the energy consumption of the accelerator.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

*Example Deep Learning System*

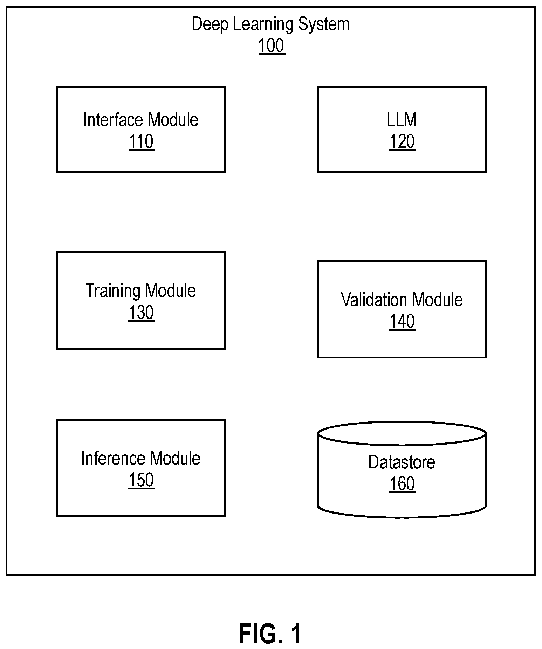

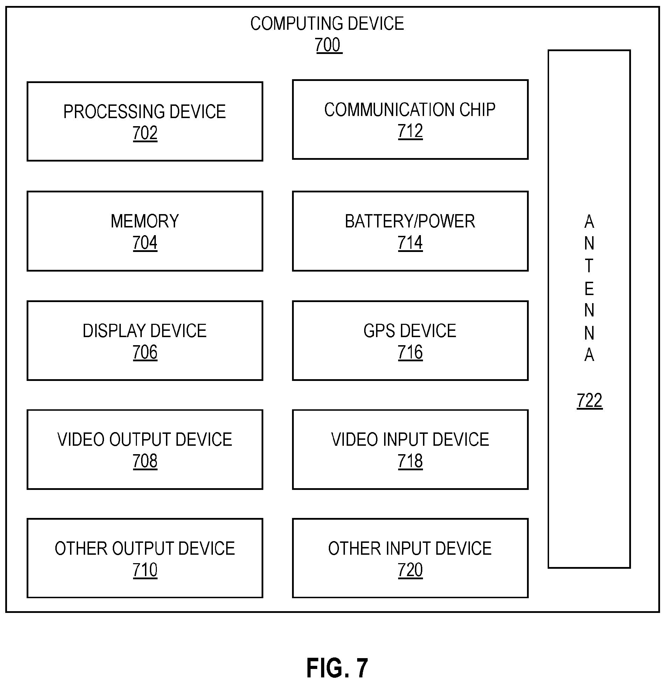

FIG. 1 is a block diagram of an example deep learning system 100, in accordance with various embodiments. The deep learning system 100 trains DNNs for various tasks, including multimodal LLM processes. In some examples, a similar system can be used to train a shallow neural network, such as the detection head discussed herein. The deep learning system 100 includes an interface module 110, a LLM 120, a training module 130, a validation module 140, an inference module 150, and a datastore 160. In other embodiments, alternative configurations, different or additional components may be included in the deep learning system 100. Further, functionality attributed to a component of the deep learning system 100 may be accomplished by a different component included in the deep learning system 100 or a different system. The deep learning system 100 or a component of the deep learning system 100 (e.g., the training module 130 or inference module 150) may include the computing device 700 in FIG. 7.

The interface module 110 facilitates communications of the deep learning system 100 with other systems. As an example, the interface module 110 supports the deep learning system 100 to distribute trained DNNs to other systems, e.g., computing devices configured to apply DNNs to perform tasks. In some examples, the interface module 110 establishes communication of the LLM 120 with a detection head as discussed herein, wherein the detection head may also be a neural network. As another example, the interface module 110 establishes communications between the deep learning system 100 with an external database to receive data that can be used to train DNNs or input into DNNs to perform tasks. In some embodiments, data received by the interface module 110 may have a data structure, such as a matrix. In some embodiments, data received by the interface module 110 may be audio, such as an audio stream, and the audio may include speech and/or an audio trigger. In some embodiments, the data received by the interface module 110 may be text and/or image data.

The multimodal large language model (LLM) 120 processes the input audio (and/or text, and/or images) to understand language or other signals in the input data. In general, the LLM reviews the input data, processes language in the input data, and/or generates language or other reactions or answers in response to the input data. During training, the LLM 120 is fed large amounts of preprocessed data, including, for example, audio data and text data, and the LLM 120 learns to predict the next word in a sequence and understand language.

The training module 130 trains DNNs by using training datasets. In some embodiments, a training dataset for training a DNN may include audio streams and/or text. In some examples, the training module 130 trains the LLM 120. The training module 130 may receive real-world audio data for processing with the LLM 120 as described herein.

In some embodiments, a part of the training dataset may be used to initially train the LLM, and the rest of the training dataset may be held back as a validation subset used by the validation module 140 to validate performance of a trained LLM. The portion of the training dataset not including the tuning subset and the validation subset may be used to train the LLM.

The training module 130 also determines hyperparameters for training the LLM. Hyperparameters are variables specifying the LLM training process. Hyperparameters are different from parameters inside the LLM (e.g., weights of filters). In some embodiments, hyperparameters include variables determining the architecture of the LLM, such as number of hidden layers, etc. Hyperparameters also include variables which determine how the LLM is trained, such as batch size, number of epochs, etc. A batch size defines the number of training samples to work through before updating the parameters of the LLM. The batch size is the same as or smaller than the number of samples in the training dataset. The training dataset can be divided into one or more batches. The number of epochs defines how many times the entire training dataset is passed through the entire network. The number of epochs defines the number of times that the deep learning algorithm works through the entire training dataset. One epoch means that each training sample in the training dataset has had an opportunity to update the parameters inside the LLM. An epoch may include one or more batches. The number of epochs may be 1, 10, 50, 100, or even larger.

The training module 130 defines the architecture of the LLM, e.g., based on some of the hyperparameters. The architecture of the LLM includes an input layer, an output layer, and a plurality of hidden layers. The input layer of an LLM may include tensors (e.g., a multidimensional array) specifying attributes of the input, such as weights and biases, attention scores, and/or activations. The output layer includes labels of objects in the input layer. The hidden layers are layers between the input layer and output layer. In various examples, the LLM can be a transformer model, a recurrent neural network (RNN), and/or a deep neural network (DNN). When the LLM includes a convolutional neural network (CNN), the hidden layers may include one or more convolutional layers and one or more other types of layers, such as pooling layers, fully connected layers, normalization layers, softmax or logistic layers, and so on. The convolutional layers of the DNN abstract the input to a feature map that is represented by a tensor specifying the features. A pooling layer is used to reduce the spatial volume of input after convolution. It is used between 2 convolution layers. A fully connected layer involves weights, biases, and neurons. It connects neurons in one layer to neurons in another layer. It is used to classify input between different categories by training.

In the process of defining the architecture of the DNN, the training module 130 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 defines the architecture of the LLM, the training module 130 inputs a training dataset into the LLM. The training dataset includes a plurality of training samples. An example of a training dataset includes a series of audio tokens of an audio stream.

The training module 130 may train the LLM for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the LLM. The validation module 140 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the LLM. In one embodiment, the training module 130 may iteratively re-train the LLM until the occurrence of a stopping condition, such as the accuracy measurement indication that the LLM may be sufficiently accurate, or a number of training rounds having taken place.

The inference module 150 applies the trained or validated LLM to perform tasks. The inference module 150 may run inference processes of a trained or validated LLM. In some examples, inference makes use of the forward pass to produce model-generated output for unlabeled real-world data. For instance, the inference module 150 may input real-world data into the LLM and receive an output of the LLM. The output of the LLM may provide a solution to the task for which the LLM is trained for.

The inference module 150 may aggregate the outputs of the LLM to generate a final result of the inference process. In some embodiments, the inference module 150 may distribute the LLM to other systems, e.g., computing devices in communication with the deep learning system 100, for the other systems to apply the LLM to perform the tasks. The distribution of the LLM may be done through the interface module 110. In some embodiments, the deep learning system 100 may be implemented in a server, such as a cloud server, an edge service, and so on. The computing devices may be connected to the deep learning system 100 through a network. Examples of the computing devices include edge devices.

The datastore 160 stores data received, generated, used, or otherwise associated with the deep learning system 100. For example, the datastore 160 stores video processed by the LLM 120 or used by the training module 130, validation module 140, and the inference module 150. The datastore 160 may also store other data generated by the training module 130 and validation module 140, such as the hyperparameters for training LLMs, internal parameters of trained LLMs (e.g., values of tunable parameters of activation functions, such as Fractional Adaptive Linear Units (FALUs)), etc. In the embodiment of FIG. 1, the datastore 160 is a component of the deep learning system 100. In other embodiments, the datastore 160 may be external to the deep learning system 100 and communicate with the deep learning system 100 through a network.

*Example Multimodal Large Language Model with Audio Trigger*

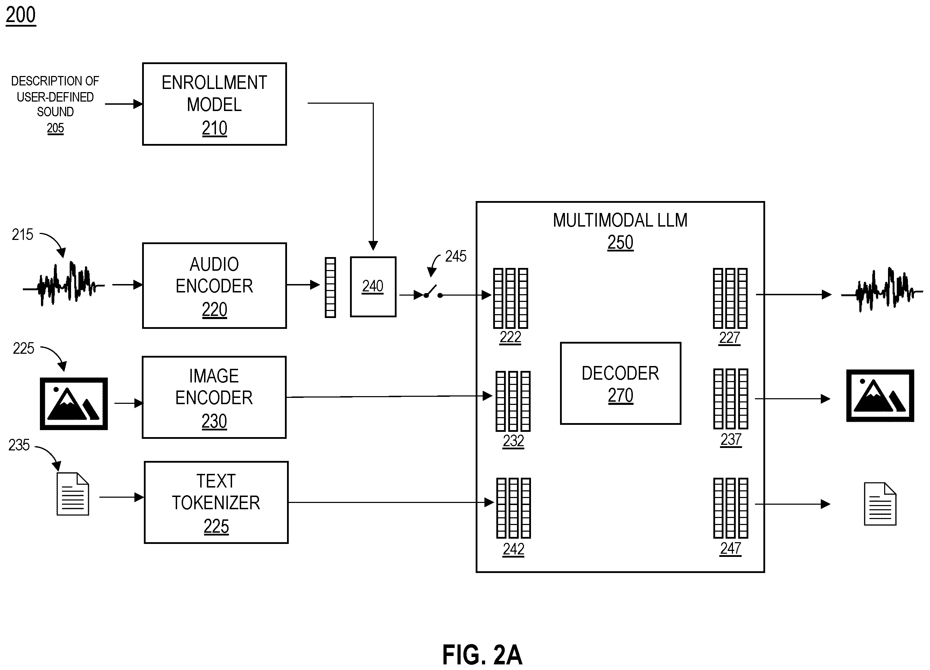

FIGS. 2A-2D illustrate example systems 200, 201, 202, 203 including a multimodal LLM 250 with an audio trigger, in accordance with various embodiments. FIG. 2A illustrates a system 200 including an audio encoder 220, an image encoder 230, a text tokenizer 225, a decoder 270, detection head 240, and an enrollment model 210. The audio encoder 220 receives an audio signal 215 and converts the audio signal into audio tokens 222, which can be input to the multimodal LLM 250. In some examples, audio tokens can be vectors of real numbers of fixed dimensions, which are extracted from the audio at a fixed frame rate (e.g., 100 tokens per second of audio). The image encoder 230 receives and encodes any input images 225, and transmits encoded images to the multimodal LLM 250 as image tokens 232. The text tokenizer 225 receives and tokenizes input text 235, and transmits the tokenized text to the multimodal LLM 250 as text tokens 242. In some examples, input text 235 can be a prompt.

The enrollment model 210 can configure the detection head 240. In general, the enrollment model 210 is executed when a user configures the audio trigger for the detection head 240. The enrollment model 210 receives a description of a user-defined sound 205 to be used as the audio trigger. In particular, a user can input a description of a sound to be used as an audio trigger. In some examples, the description can be text of an audio trigger keyword or the description can be an abstract sound category (e.g., a sound of a dog barking, a sound of hands clapping). The enrollment model 210 processes the textual description and outputs audio trigger parameters to the detection head 240. The detection head 240 uses the received parameters to determine the similarity between the user-defined audio trigger and received audio tokens from the audio encoder 220. For example, the detection head 240 can process an audio token output from the audio encoder 220 and determine a score for selected sounds based on the parameters for the user-defined audio trigger. If the score is below a threshold, LLM inference at the multimodal LLM 250 is bypassed. In various examples, image encoding can also be bypassed, and bypassing the image encoder can conserve energy. In various examples, the default state of the multimodal LLM 250 is for LLM inference to be bypassed, such that LLM inference proceeds when an audio trigger is detected.

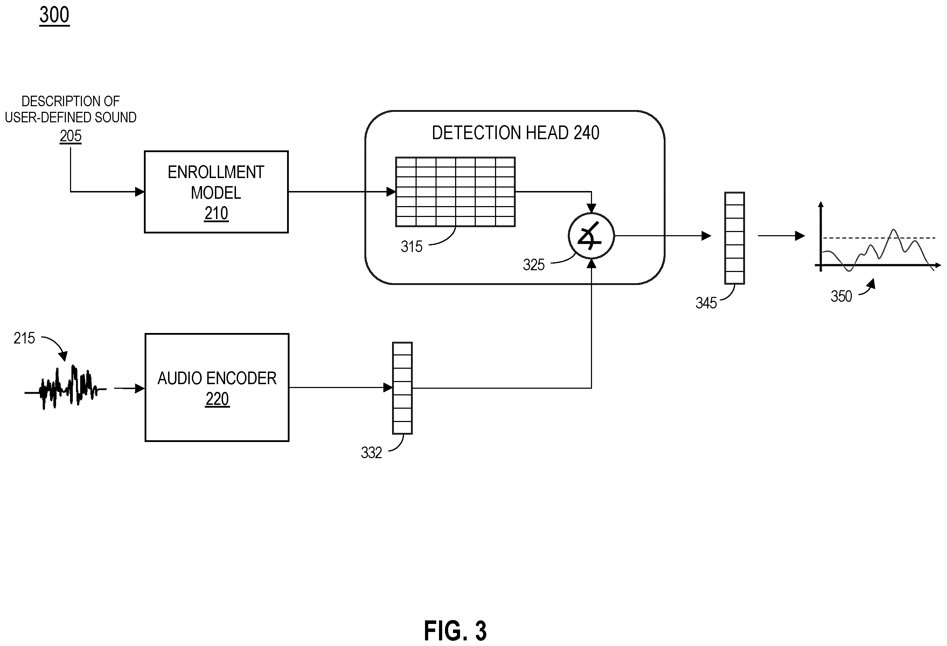

As shown in FIG. 2A, the detection head 240 includes a switch 245, and the switch 245 remains open when the score at the detection head is below a threshold, causing the multimodal LLM 250 to be bypassed. In particular, when the switch 245 is open, the audio tokens from the audio encoder 220 are not transmitted to the multimodal LLM 250 for processing (e.g., inference). Bypassing the multimodal LLM 250 can save a lot of power, while also protecting the privacy of speakers in the ambient environment around the multimodal LLM 250. When the detection head 240 detects an audio trigger (e.g., when the score determined at the detection head 240 is at or above a selected threshold score), the switch 245 is closed and audio tokens 222 are transmitted to the multimodal LLM 250 for processing. The detection head 240 is discussed in greater detail with respect to FIG. 3.

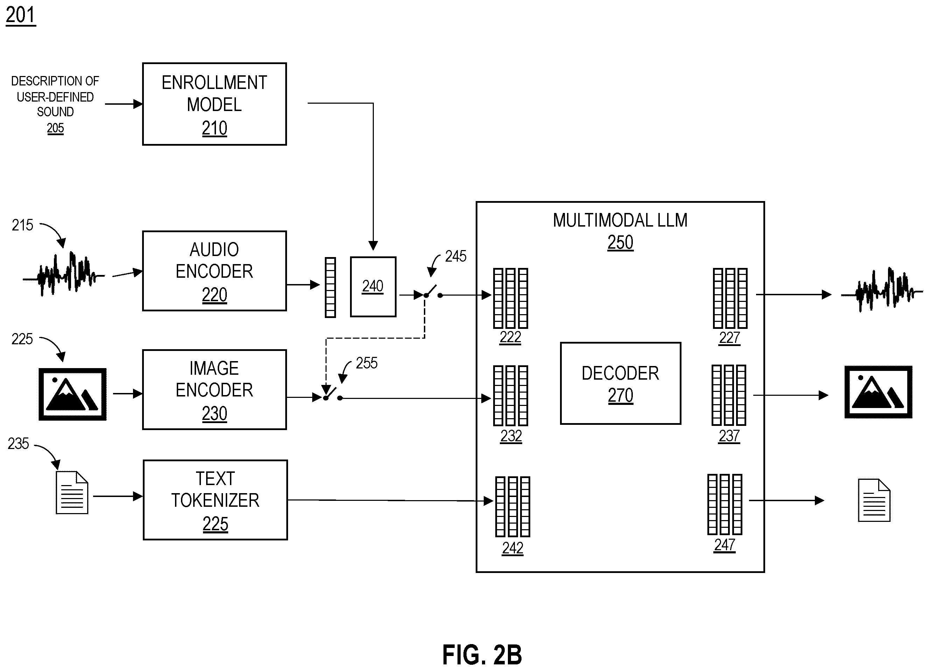

FIG. 2B illustrates a system 201 including the audio encoder 220, the image encoder 230, and the detection head 240. As shown in FIG. 2B, the system 201 is configured such that the detection head 240 can also affect a second switch 255. When the second switch 255 is open, image tokens from the image encoder 230 are not transmitted to the multimodal LLM 250 for processing. Thus, when the score at the detection head 240 is below a selected threshold (i.e., the audio trigger is not detected), the second switch 255 remains open (in addition to the first switch 245), such that image tokens 232 are not transmitted to the multimodal LLM 250 and the multimodal LLM 250 is bypassed.

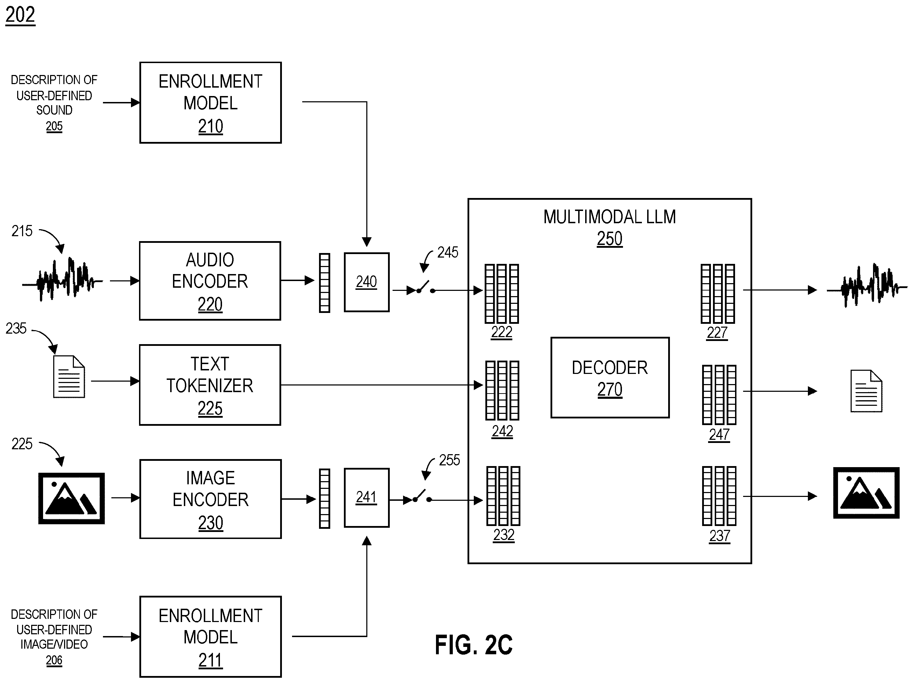

FIG. 2C illustrates a system 202 including the audio encoder 220, the image encoder 230, the detection head 240, the enrollment model 210, a second detection head 241, and a second enrollment model 211. In the system 202, an image and/or video can be used as a trigger for LLM inference. In particular, the second enrollment model 211 can receive a description of the image and/or video 206 to be used as a trigger for multimodal LLM inference. One example of a description of user-defined image and/or video is "a user waving a hand". The second enrollment model 211 processes the textual description and outputs image and/or video trigger parameters to the second detection head 241. The second detection head 241 uses the received parameters to determine the similarity between the user-defined image and/or video trigger and received image tokens from the image encoder 230. For example, the second detection head 241 can process an image token output from the image encoder 230 and determine a score for selected image parameters based on the parameters for the user-defined image trigger. If the score is below a threshold, input of image tokens for LLM inference at the multimodal LLM 250 is bypassed. In various examples, image encoding can also be bypassed, and bypassing the image encoder 230 can conserve energy. In various examples, the default state of the multimodal LLM 250 is for LLM inference to be bypassed, such that LLM inference proceeds when an audio or image trigger is detected.

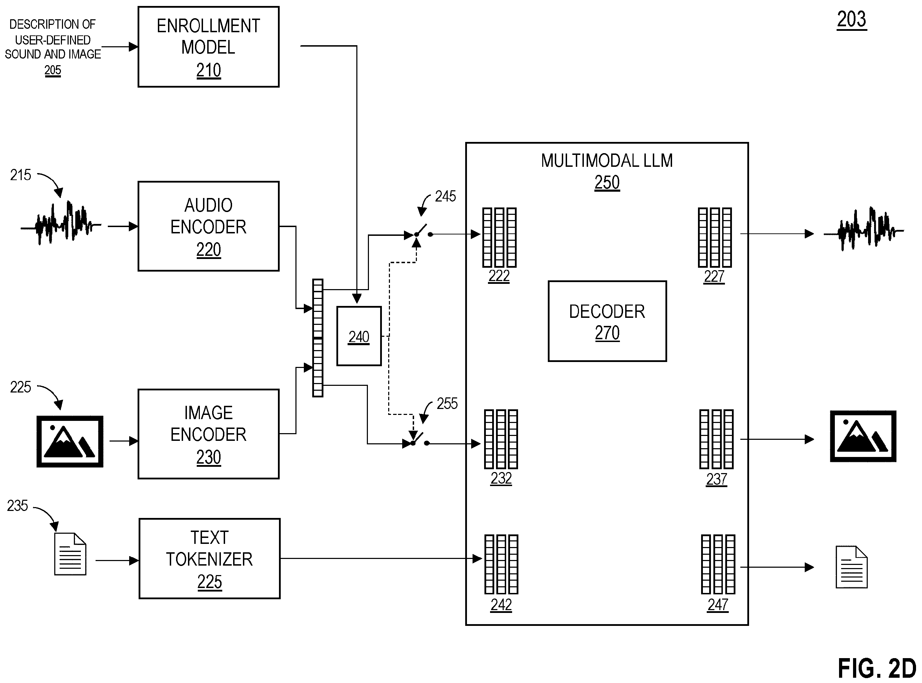

FIG. 2D illustrates a system 203 including the audio encoder 220, the image encoder 230, the detection head 240, and the enrollment model 210. FIG. 2D illustrates a system in which a user can trigger multimodal LLM 250 inference on based on both an audio trigger and an image trigger. As noted above, the audio trigger can include multiple audio triggers and the image trigger can include multiple image and/or video triggers. System 203 includes one joint detection head 240 and one enrollment branch 210. The enrollment branch 210 can receive a description of a user-defined sound and image, such as "someone saying 'hello' while waving their hand". In one example, the detection head 240 receives a set of concatenated audio and image tokens. In another example, the detection head 240 receives a set of audio and image tokens summed with weights. As described above, the enrollment model 210 processes the textual description and outputs audio and image trigger parameters to the detection head 240. The detection head 240 uses the received parameters to determine the similarity between the user-defined audio and image trigger and the set of audio and image tokens. For example, the detection head 240 can process the set of audio and image tokens and determine a score for the tokens based on the parameters for the user-defined audio and image trigger.

The multimodal LLM 250 processes the received tokens, including audio tokens 222, text tokens 242, and/or image tokens 232. The multimodal LLM 250 is configured to understand the input data (e.g., input language and/or images) and generates an output based on the received tokens. In some examples, the multimodal LLM 250 is a neural network, such as a transformer neural network and/or an encoder-decoder architecture. In some examples, the encoded data in for the multimodal LLM 250 is used by the detection head neural network model to identify the presence of a trigger word. The multimodal LLM 250 includes a decoder 270, which generates output audio tokens 227, text tokens 247, and/or image tokens 237 based on the received input tokens. Audio tokens 227 are used to generate audio output, text tokens 247 are used to generate text output, and image tokens are used to generate image output. In various examples, the multimodal LLM 250 can incorporate data from input text tokens 242 and/or input image tokens 232 when generating output audio tokens 227. Similarly, in some examples, the multimodal LLM 250 can incorporate data from input audio tokens 222 and/or input image tokens 232 when generating output text tokens 247, and, in some examples, the multimodal LLM 250 can incorporate data from input text tokens 242 and/or input audio tokens 222 when generating output image tokens 237.

In various examples, while interacting with artificial intelligence, such as one of the systems 200, 201, 202, 203, a user may prefer to give the virtual assistant an original name or nickname. The name chosen by the user can be used as a keyword (i.e., audio trigger) to trigger processing by the multimodal LLM 250. In various implementations, the enrollment of the selected name as the keyword can occur through a user conversation in natural language with the system. In one example scenario, the user tells the system what its new name is (i.e., what the audio trigger is):

USER: From now on, I want you to be named *Alfred.*
ASSISTANT: OK, my name is Alfred now.
USER: I don't want you to respond to me unless I call *Alfred,* OK?
ASSISTANT: Got it!
USER: Oh! Or until I clap my hand three times.
ASSISTANT: As you wish, I will stay silent until you call me *Alfred* or clap your hands three times.

Following the above conversation, the assistant software runs inference of two text descriptions with the enrollment model 210. One of the descriptions of user-defined sound 205 to enroll as an audio trigger is "Alfred", and the other description of user-defined sound 205 to enroll as an audio trigger is "someone claps their hands three times". After enrollment is completed, the text embeddings of the two audio triggers are transmitted to the detection head 240, which is configured to react to both the audio trigger "Alfred" and the audio trigger of the sound of three hand claps. The user may continue to have a private conversation with multimodal LLM 250 inference disabled until the user uses one of the audio triggers.

FIG. 3 illustrates an example system 300 including a detection head 240 for identifying an audio trigger, in accordance with various embodiments. The system 300 can be a language-audio model, and can transform both text and audio data into latent representations. The system 300 can determine the similarity of text and audio data. In some examples, the description of the user-defined sound 205 is text input that is compared to an audio input 215. As shown in FIG. 3, the description of the user-defined sound 205 is a text input to the enrollment model 210, the audio input 215 is input to the audio encoder 220, and the text input and audio input are compared at the detection head 240. In various embodiments, the detection head 240 performs the comparison between the text input 205 and the audio input 215 without any training on either of the inputs 205, 215. Thus, in some embodiments, the detection head 240 can perform zero-shot acoustic classification (i.e., acoustic classification of an audio input without training on similar inputs), and the detection head 240 can perform zero-shot keyword spotting (i.e., identifying an audio trigger without training on the selected audio trigger).

Referring to FIG. 3, the enrollment model 210 can determine embeddings of text that describe the categories of relevant sounds. The enrollment model 210 can be a transformer model. In some examples, the enrollment model 210 identifies C categories of relevant sounds and the embeddings of text have $N_e$ coefficients. In some examples, the embeddings of text have between about 512 and about 1024 coefficients. The detection head 240 can be a neural network, and in some examples, the detection head 240 is a shallow neural network. The embeddings of text are used as weights in the detection head 240 neural network model. In particular, the detection head 240 neural network can have C nodes and $N_e$ weights. Each node of the neural network determines a dot product between an audio token and the text embeddings for a selected class. The dot product is normalized, and after normalization, the dot product is interpreted as a cosine similarity (e.g., the dot product is interpreted as an angle between vectors) to generate similarity scores 345. The similarity scores 345 for each of the C classes are compared with one or more thresholds 350 to determine a detection decision. In some examples, the number of parameters of the detection head 240 equals $N_e \cdot C$. Thus, for ten classes and 512 embedding coefficients, the memory overhead is 5 KB in 8-bit precision. Similarly, for ten classes and 512 embedding coefficients, the memory overhead is 10 KB for 16-bit precision. Additionally, the enrollment model 210 is executed when configuring the audio trigger, and the enrollment model 210 is otherwise in standby or sleep mode and not contributing to the continuous compute and/or memory usage of the system. Thus, the system 300 for detection of the audio trigger adds minimal overhead in memory and compute to a multi-modal LLM.

In various implementations, the enrollment model 210 and the audio encoder 220 are trained together to ensure similarity between the audio tokens and embedding of text that described the sound. In some examples, the audio encoder 220 is fixed and the enrollment model 210 is trained alone. In some examples, the audio encoder 220 is a part of a pretrained multimodal LLM 250 and tuning the parameters of the audio encoder 220 when it is a part of a pretrained multimodal LLM 250 can have an effect on the multimodal LLM 250. In some examples, the enrollment model 210 and the audio encoder 220 are trained using contrastive criteria. Training can include providing the enrollment model 210 and the audio encoder 220 with pairs of data points, where each pair is either similar/correlated/positive (the description of the sound matches the audio input) or dissimilar/uncorrelated/negative (the description of the sound does not match the audio input). Feature representations are extracted from each data point in the pair of data points, and the enrollment model 210 and the audio encoder 220 learn to map the input data pairs to a feature space. A contrastive loss function can be applied to the data pairs that causes the feature representations of the data pairs to move closer together when the data points in the pair are similar, and causes the feature representations of the data pairs to move further apart when the data points in the pair are dissimilar. During training, model parameters can be iteratively adjusted to minimize the contrastive loss. In some examples, the performance of the enrollment model 210 and the audio encoder 220 can be evaluated based on correct identification of data pairs that were not used during training.

According to various implementations, when the multimodal LLM 250 is trained, the audio encoder 220 and enrollment model 210 remain frozen. In some implementations, when the multimodal LLM 250 is trained, the audio encoder 220 is trained, and enrollment model 210 remains frozen.

The system 300 shown in FIG. 3 including the audio encoder 220, and the detection head 240 can be implemented in hardware, for example in a DSP subsystem. The DSP subsystem can include embedded neural network acceleration. In some examples, the audio encoder 220 can be implemented in a DSP subsystem having an embedded accelerator, using between about 3 million and about 10 million parameters, using between about 400 million to one gig of operations per inference, and performing between about 30 and about 100 inferences per second. The detection head 240 can also be implemented in a DSP subsystem having an embedded accelerator, using between about 1 K and about 10 K parameters, and between about 1 K and 10 K operations per inference, with between about 30 and 100 inferences per second. The enrollment model 210 can be implemented in the CPU, but is generally only used during configuration of an audio trigger (e.g., keyword or sound).

*Example Method for a Multimodal Large Language Model with an Audio Trigger*

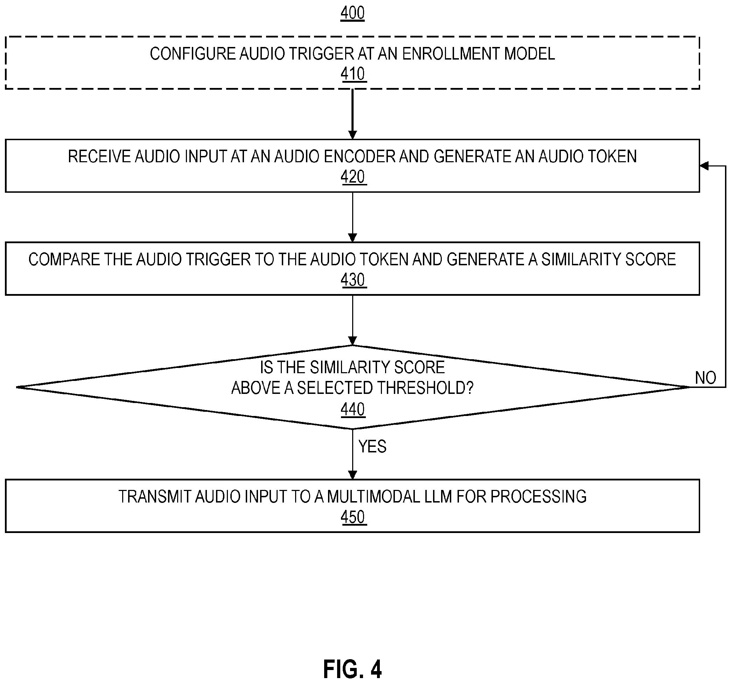

FIG. 4 is a flow chart illustrating an example method 400 for a multimodal LLM with an audio trigger, in accordance with various embodiments. The method 400 may be used by the systems 200 and/or 300, for example to determine whether to bypass LLM inference or transmit audio input tokens (and/or image input tokens) to an LLM. At step 410, an audio trigger is configured at an enrollment model. In some examples, configuring the audio trigger includes entering text describing the sound to be used as an audio trigger. The text can include a keyword that is the audio trigger, and the text can include a description of a sound to be used as an audio trigger (e.g., "a cat's meow", "two finger snaps", etc.). The enrollment model can generate a latent representation of the audio trigger and/or an embedding of the audio trigger. In some implementations, the audio trigger is already configured, and the method 400 begins at step 420. In some implementations, an audio trigger is already configured and one or more additional audio triggers are added.

At step 420, audio input is received at an audio encoder, and audio tokens are generated based on the audio input. In some examples, audio tokens can be vectors of real numbers of fixed dimensions, which are extracted from the audio at a fixed frame rate (e.g., 100 tokens per second of audio). In various embodiments, multiple audio tokens can be generated at the audio encoder based on the audio input. An audio token can represent a word, phrase, sound, or other portion of the received audio input. In various embodiments, the audio encoder outputs the generated audio token(s) to a detection head.

At step 430, the audio tokens from step 420 and the audio trigger (e.g., from step 410) are compared and a similarity score is generated. In some embodiments, the audio tokens and the audio trigger are compared at a detection head, such as the detection head 240 discussed above with respect to FIGS. 2A-2D and 3. As discussed above, the detection head may be a shallow neural network, in which the embeddings of text for the audio trigger are used as weights. In some examples, the detection head neural network can have $C$ nodes and $N_e$ weights, and each node of the neural network determines a dot product between the audio token and the text embeddings. The dot product is normalized and interpreted as a cosine similarity to generate a similarity score for the audio token and the audio trigger.

At step 440, the similarity score for the audio tokens and the representation of the audio trigger is compared to a threshold, and it is determined whether the similarity score is above the selected threshold. When the similarity score is below the selected threshold, it is determined that the audio tokens do not match the audio trigger, multimodal LLM inference continues to be bypassed, and the method 400 returns to step 420 to receives a next audio input. When the similarity score is (equal to or) above the selected threshold at step 440, it is determined that the audio tokens match the audio trigger, and the method 400 proceeds to step 450.

At step 450, the audio input is transmitted to a multimodal LLM for processing. In some examples, a switch positioned after the detection head is closed when the similarity score for the audio tokens and the audio trigger is above the selected threshold, allowing the audio tokens generated by the audio encoder to be transmitted to the multimodal LLM for multimodal LLM inference. The switch remains open when the similarity score is below the selected threshold, preventing transmission of audio signals to the multimodal LLM, and bypassing multimodal LLM inference.

The method 400 can also be performed for a multimodal LLM with an image trigger and/or with an audio and image trigger, in accordance with various embodiments. Similarly, the method 400 can be performed for a multimodal LLM with text input, and/or for any combination of audio, image, and/or text triggers. For example, at step 410, an image trigger can be configured at an enrollment model, or a combination of an audio trigger and an image trigger. The enrollment model can generate a latent representation of the image trigger and/or an embedding of the image trigger. In some implementations, the image trigger is already configured, and the method begins at step 420. In some implementations, an image trigger (and/or an audio trigger) is already configured and one or more additional image triggers and/or audio triggers are added.

Similarly, at step 420, an image input can be received at an image encoder, and image tokens are generated based on the image input. In some examples, image tokens can be vectors of real numbers of fixed dimensions, which are extracted from the image at a fixed frame rate (e.g., 100 tokens per image frame). In various embodiments, multiple image tokens can be generated at the image encoder based on the image input. An image token can represent a pixel, multiple pixels, a portion of an image, an image frame, or other portion of the received image input. In various embodiments, the image encoder outputs the generated image token(s) to a detection head.

The image tokens and the representation of the image trigger are compared and a similarity score is generated. In some embodiments, the image tokens and the image trigger are compared at a detection head, such as the detection head 240 discussed above with respect to FIGS. 2A-2D and 3. As discussed above, the detection head may be a shallow neural network, in which the embeddings of text for the image trigger are used as weights. In some examples, the detection head neural network can have $C$ nodes and $N_e$ weights, and each node of the neural network determines a dot product between an image token and the image embeddings. The dot product is normalized and interpreted as a cosine similarity to generate a similarity score for the image token and the image trigger.

A similarity score for the image tokens and the image trigger is compared to an image score threshold, and it is determined whether the similarity score is above the selected image score threshold. When the similarity score is below the selected image score threshold, it is determined that the image tokens do not match the image trigger, multimodal LLM inference continues to be bypassed, and the method 400 returns to step 420 to receives a next input. When the similarity score is (equal to or) above the selected image score threshold at step 440, it is determined that the image tokens match the representation of the image trigger, and the method 400 proceeds to step 450.

At step 450, the image input can be transmitted to a multimodal LLM for processing. In some examples, a switch positioned after the detection head is closed when the similarity score for the image tokens and the representation of the image trigger is above the selected image score threshold, allowing the image tokens generated by the image encoder to be transmitted to the multimodal LLM for multimodal LLM inference. The switch remains open when the similarity score is below the selected image score threshold, preventing transmission of image signals to the multimodal LLM, and bypassing multimodal LLM inference.

*Example Transformer Models*

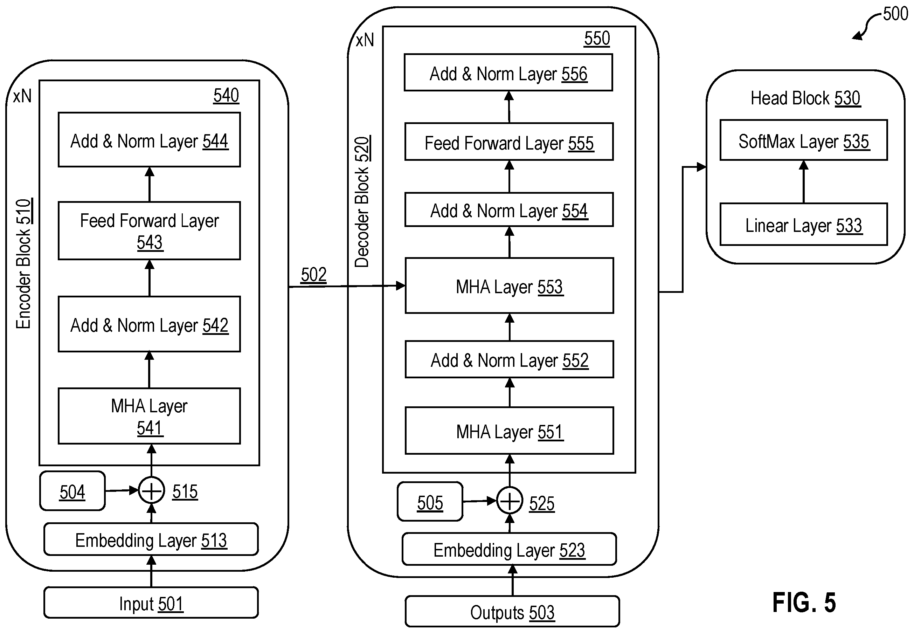

FIG. 5 illustrates an example transformer model 500, in accordance with various embodiments. The transformer model 500 may transform input sequences into output sequences. In some embodiments, the transformer model 500 is a neural network that can learn context and meaning by tracking relationships in sequential data, such as sequential words in a sentence, sequential audio signals, sequential images, and so on. In some examples, the transformer model 500 may be an LLM, and in some examples, the transformer model 500 may be a multimodal LLM. The transformer model 500 includes an encoder block 510, a decoder block 520, and a head block 530. In other embodiment, different or additional components may be included in the transformer model 500. Further, functionality attributed to a component of the transformer model 500 may be accomplished by a different component included in the transformer model 500 or a different model or module.

The encoder block 510 receives input sequences and generates matrix representations of the input sequences. In the embodiments of FIG. 5, the encoder block 510 receives inputs 501 and generates encoder outputs 502. In some embodiments, the inputs 501 may include one or more input tokens, such as words, phrases, sentences, images, audio signals, other types of input tokens, or some combination thereof. In an example, the inputs 501 may include a prompt received from a user of the transformer model 500. The prompt may include a question or request made by the user. A word in the prompt may be an input token. The encoder outputs 502 may include one or more vectors that are contextualized representations of the input 501. Each vector in the encoder outputs 502 may represent a token in the input 501 with contextual understanding.

The encoder block 510 includes an embedding layer 513, a positional encoding layer 515, and a plurality of layers 540 (individually referred to as "layer 540"). In other embodiments, the encoder block 510 may have different, fewer, or more components. Also, the arrangement of the components in the encoder block 510 may be different from the arrangement shown in FIG. 5. For the purpose of illustration, the encoder block 510 has N layers in FIG. 5, where N is an integer. Each layer 540 may include one or more neural network operations. The layers 540 may transform a sequence of embeddings into a representation that encapsulates the learned information from the input 501. Different layers 540 may have different internal parameters, e.g., different weights, bias, or other types of internal parameters. In some embodiments, the layers 540 have identical components. The components in a layer 540 may be layers and may also be referred to as sub-layers of the layer 540. As shown in FIG. 5, a layer 540 includes four sub-layers: an MHA layer 541, an add & norm layer 542, a feed forward layer 543, and another add & norm layer 544.

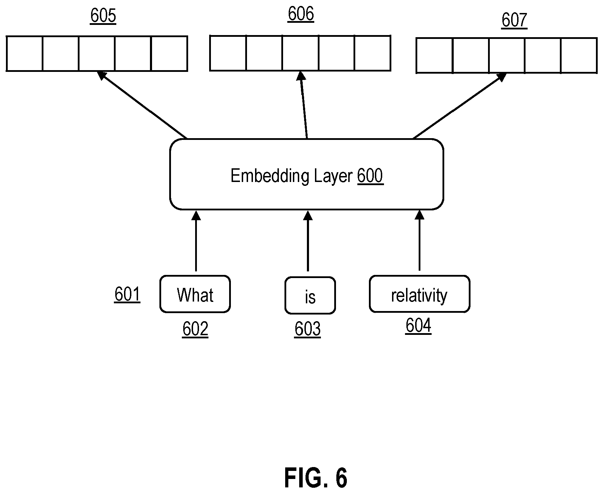

The decoder block 520 iteratively generates outputs 503 using encoded representations generated by the encoder block 510. The decoder block 520 includes an embedding layer 523, a positional encoding layer 525, and a plurality of layers 550 (individually referred to as "layer 550"). For the purpose of illustration, the decoder block 520 has N layers in FIG. 5, where N is an integer. In the embodiments of FIG. 6, the number of layers 550 in the decoder block 520 is the same as the number of layers 540 in the encoder block 510. In other embodiments, the number of layers 550 in the decoder block 520 may be different from the number of layers 540 in the encoder block 510. Each layer 550 may include one or more neural network operations. Different layers 550 may have different internal parameters. In some embodiments, the layers 550 may have identical components. The components in a layer 550 may be layers and may also be referred to as sub-layers of the layer 550. As shown in FIG. 5, a layer 550 includes six sub-layers: an MHA layer 551, an add & norm layer 552, an encoder-decoder attention layer 553, another add & norm layer 554, a feed forward layer 555, and another add & norm layer 556.

In some embodiments, a sequence of inference phases is performed in the decoder block 520 using encoder outputs, e.g., the encoder outputs 502. A matrix may be predicted through each inference phase. The outputs 503 may include a plurality of matrices. Each matrix may be further processed in the head block 530 to predict a token. The plurality of matrices may be used to predict a sequence of tokens. For the first inference phase, the decoder block 520 may receive one or more start tokens as input tokens and compute a first matrix from the input tokens and the output of the encoder block 510. The first matrix may be used by the head block 530 to predict a first token. The predicted token may be used as a new input token, in addition to the start token(s), in the second inference phase. Similarly, a second token may be predicted through the second inference phase and may be used in the third inference phase. This iteration may continue till all the inference phases are complete.

The head block 530 receives the output of the decoder block 520 and processes it in a linear layer 533 and a SoftMax layer 535. A linear operation may be performed on the output of the decoder block 520 in the linear layer 533. The linear operation may include a multiplication of the output of the decoder block 520 with a weight matrix. The output of the linear layer 533 may be a vector. In some embodiments, the head block 530 may function as a classifier. The number of data elements in the vector computed in the linear layer 533 may depend on the number of classes involved. In an example where there are M classes, where M is an integer, the vector computed in the linear layer 533 may have M data elements representing the prediction for the M classes, respectively.

The output of the linear layer 533 may be input into the SoftMax layer 535. A SoftMax function may be applied on the output of the linear layer 533 to compute probability scores. A probability score may have a value in the range from 0 to 1. In some embodiments, a probability value is computed for each data element in the vector computed in the linear layer 533. The highest one of the probability scores may be the key. The corresponding index of the key may point to the token that the transformer model 500 predicts as the next in the sequence. The final output of the transformer model 500 may be the sequence of predicted tokens. In some embodiments, the head block 530 may be a language modeling head.

An embedding layer (e.g., the embedding layer 513 or the embedding layer 523) converts an input of the embedding layer (e.g., the inputs 501 or the outputs 503) into one or more embeddings. An embedding may be a vector, which is also referred to as an embedding vector or a vector embedding. The vector embedding may include a sequence of data elements. In some embodiments, the embedding layer 513 may generate a plurality of embeddings, each of which may be converted from a different input token in the inputs 501. The embeddings may capture the semantic meaning of the tokens in the input 501. The embeddings may be numerical representations that capture the relationships or meanings of words, phrases, or other data types. In an example where the input 501 is a prompt including a sequence of words, the embedding layer 513 may generate an embedding from each word in the input 501. The embedding layer 523 in the decoder block 520 may generate a plurality of embeddings from tokens received by the decoder block 520 in a similar manner as the embedding layer 513.

A positional encoding layer (e.g., the positional encoding layer 515 or the positional encoding layer 525) performs positional encoding on embeddings generated in the corresponding embedding layer. In some embodiments, the positional encoding layer may apply one or more positional encoding vectors (e.g., a positional encoding vector 504 or positional encoding vector 505) on vector embeddings from the corresponding embedding layer to generate new vector embeddings that represents the embeddings with positional context. The positional encoding vector may encode information about the position of the embedding in a sequence of embeddings. In some embodiments, the positional encoding layer performs an addition operation on a positional encoding vector and a vector embedding. The addition operation may be elementwise addition. The positional encoding layer may output an embedding matrix that includes the vector embeddings computed in the positional encoding layer.

An MHA layer (e.g., the MHA layer 541, the MHA layer 551, or the MHA layer 553) may implement a multi-head attention mechanism, which may be a multi-head self-attention mechanism or a multi-head cross-attention mechanism. In some embodiments, the MHA layer 541 or the MHA layer 551 may implement a self-attention mechanism. For self-attention, the queries, keys, and values may come from the same place. For instance, for the MHA layer 541, the queries, keys, and values may all come from the positional encoding layer 515. For the MHA layer 551, the queries, keys, and values may all come from the positional encoding layer 525. The self-attention mechanism may enable the transformer model 500 to relate each token with other tokens. The MHA layer may compute attention scores from embeddings generated in the corresponding positional encoding layer. In some embodiments, the MHA layer may receive one or more queries, one or more keys, and one or more values. In some embodiments, the MHA layer has a number of heads that receive different linearly projected versions of the queries, keys, and values and produce outputs in parallel that are then used to generate the final result.

In some embodiments, the queries, keys, and values input into the MHA layer 541 may be computed from vector embeddings generated by the positional encoding layer 515. The queries, keys, and values input into the MHA layer 551 may be computed from vector embeddings generated by the positional encoding layer 525. A query, key, or value may be a vector the represents a token in a sequence. In some embodiments, a query matrix $Q \in \mathbb{R}^{N \times h}$ may be computed by multiply an embedding matrix $X \in \mathbb{R}^{N \times d}$ (e.g., an embedding matrix computed in a positional encoding layer) with a weight matrix $W_q \in \mathbb{R}^{d \times h}$, where d is the dimension of a vector embedding, N is the number of vector embeddings in the embedding matrix, and h is the number of attention heads. Each row in the query matrix may be a query. A key matrix $K \in \mathbb{R}^{N \times h}$ may be computed by multiple an embedding matrix $X \in \mathbb{R}^{N \times d}$ (e.g., an embedding matrix computed in a positional encoding layer) with a weight matrix $W_k \in \mathbb{R}^{d \times h}$. Each row in the key matrix may be a key. A value matrix $V \in \mathbb{R}^{N \times h}$ may be computed by multiple an embedding matrix $X \in \mathbb{R}^{N \times d}$ (e.g., an embedding matrix computed in a positional encoding layer) with a weight matrix $W_v \in \mathbb{R}^{d \times h}$. Each row in the value matrix may be a value.

In some embodiments, the MHA layer 551 may implement masked multi-head self-attention. The MHA layer 551 may prevent positions from attending to subsequent positions. For instance, each token in the sequence may not be influenced by future tokens. This masking can ensure that the predictions of a particular position can depend on known outputs at positions before it and not depend on unknown outputs at positions after it.

In some embodiments, the MHA layer 553 may implement a cross-attention mechanism, such as encoder-decoder cross-attention. The MHA layer 553 may use outputs from the previous layer (i.e., the add & norm layer 552) as queries and use outputs from the encoder block 510 as keys and values. The cross-attention can align the encoder's input with the decoder's, empowering the decoder block 520 to identify and emphasize the most relevant parts of the encoder's input.

An add & norm layer in the transformer model 500, such as the add & norm layer 542, 544, 552, 554, and 556, has an addition operation followed by a layer normalization operation. The addition operation may be an addition of the output of the preceding layer and the input of the preceding layer. The preceding layer is a layer that is arranged right before the add & norm layer. For example, the preceding layer of the add & norm layer 542 is the MHA layer 541. As another example, the preceding layer of the add & norm layer 554 is the encoder-decoder attention layer 553.

Then the layer normalization operation is applied on the result of the addition operation, which may be denoted as *LayerNorm(x + sublayer(x))*, where *LayerNorm* denotes layer normalization, *x* is the input of the preceding layer, and *sublayer(x)* denotes the output of the preceding layer. In some embodiments, the layer normalization operation may include a sequence of computations. In an example, the layer normalization operation may include a mean computation, which may be denoted as $\mu_{xy} = \frac{1}{Z} \times \sum_{z=1}^{Z} A_{xyz}$ , where $A_{xyz}$ denotes a data element in the input tensor, *x* may be the positional index of the data element in one of the spatial dimensions, *y* may be the positional index of the data element in the other one of the spatial dimensions, *z* may be the positional index of the data element in the channel dimension, and $\mu_{xy}$ denotes the output of the mean computation, which may be a 2D matrix. The mean computation may be channel-wise reduction operation. The layer normalization operation may convert $\mu_{xy}$ to a 3D tensor $\mu_{xyz}$, e.g., by replicating every data element over z output points.

The layer normalization operation may also include an elementwise subtraction, which may be denoted as $D_{xyz} = A_{xyz} - \mu_{xyz}$. The layer normalization operation may further include a variance computation denoted as $\sigma^2_{xy} = \sum_{z=1}^{Z} D^2_{xyz}$ and a division computation denoted as $M_{xy} = \frac{1}{\sqrt{\frac{1}{Z} \times (\sigma^2_{xy} + \epsilon \times Z)}}$ . $M_{xy}$ may be a 2D tensor. The layer normalization operation may also convert $M_{xy}$ to a 3D tensor $M_{xyz}$, e.g., by replicating every data element over z output points. Further, the layer normalization operation may have an element multiplication denoted as

$$A'_{xyz} = \frac{A_{xyz} - \mu_{xyz}}{\sqrt{\frac{1}{Z} \times (\sigma^2_{xy} + \epsilon)}} = \left(A_{xyz} - \mu_{xyz}\right) \times \frac{1}{\sqrt{\frac{1}{Z} \times (\sigma^2_{xy} + \epsilon)}} = D_{xyz} \times M_{xyz}$$ . The layer normalization operation may further compute $A''_{xyz} = A'_{xyz} + \frac{\beta_z}{\gamma_z}$ and $LN_{xyz} = A''_{xyz} \times \gamma_z$. $LN_{xyz}$ may be the output of the layer normalization operation.

A feed forward layer (e.g., the feed forward layer 543 and the feed forward layer 555) may be a position-wise fully-connected feed forward network. In an example, the feed forward layer may include two linear layers with an activation function in between. An example of the activation function is Rectified Linear Unit (ReLU).

FIG. 6 illustrates an embedding operation in an embedding layer 600, in accordance with various embodiments. The embedding layer 600 may be an example of the embedding layer 513 or the embedding layer 523 in FIG. 5. As shown in FIG. 6, the embedding layer 600 receives an input sequence 601, which includes three words 602, 603, and 604. Each word may be a token. The embedding layer 600 generates a vector embedding 605 from the word 602. The embedding layer 600 also generates a vector embedding 606 from the word 603. The embedding layer 600 further generates a vector embedding 607 from the word 604. In the embodiments of FIG. 6, the vector embeddings 605, 606, and 607 have the same dimension, i.e., they each have five data elements. In other embodiments, the vector embedding 605, 606, or 607 may have a different dimension. Also, the input to the embedding layer 600 may be data of a type other than words, such as audio signals, images, and so on.

In some embodiments where the embedding layer 600 is in an encoder (e.g., the encoder block 510), the input sequence 601 may be an input received by the encoder, such as a prompt made by a user. The input sequence 601 may remain the same during inference of the encoder. In some embodiments where the embedding layer 600 is in a decoder (e.g., the decoder block 520), the input sequence 601 may change and the dimension of the input sequence 601 may be dynamic during inference of the decoder. In an example, the decoder inference may include a sequence of phases. Each inference phase may be conducted for predicting a token. For the first inference phase, the input sequence 601 may include one or more start tokens. For each subsequent inference phase (e.g., the second inference phase, the third inference phase, etc.), the input sequence 601 may include tokens predicted in the previous inference phases. The dimension of the input sequence may be increased by one after each inference phase.

*Example Computing Device*

FIG. 7 is a block diagram of an example computing device 700, in accordance with various embodiments. In some embodiments, the computing device 700 can be used as at least part of the systems 200, 201, 202, 203, the system 300,

12

and/or various parts of the systems 200, 201, 202, 203, 300, such as the enrollment model 210, the detection head 240, and the multimodal LLM 250. A number of components are illustrated in FIG. 7 as included in the computing device 700, but any one or more of these components may be omitted or duplicated, as suitable for the application. In some embodiments, some or all of the components included in the computing device 700 may be attached to one or more motherboards. In some embodiments, some or all of these components are fabricated onto a single system on a chip (SoC) die. Additionally, in various embodiments, the computing device 700 may not include one or more of the components illustrated in FIG. 7, but the computing device 700 may include interface circuitry for coupling to the one or more components. For example, the computing device 700 may not include a display device 706, but may include display device interface circuitry (e.g., a connector and driver circuitry) to which a display device 706 may be coupled. In another set of examples, the computing device 700 may not include an audio input device 718 or an audio output device 708, but may include audio input or output device interface circuitry (e.g., connectors and supporting circuitry) to which an audio input device 718 or audio output device 708 may be coupled.

The computing device 700 may include a processing device 702 (e.g., one or more processing devices). The processing device 702 processes electronic data from registers and/or memory to transform that electronic data into other electronic data that may be stored in registers and/or memory. The computing device 700 may include a memory 704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 704 may include memory that shares a die with the processing device 702. In some embodiments, the memory 704 includes one or more non-transitory computer-readable media storing instructions executable to perform deep learning operations, e.g., the methods described above in conjunction with FIGS. 2A-4. The instructions stored in the one or more non-transitory computer-readable media may be executed by the processing device 702.

In some embodiments, the computing device 700 may include a communication chip 712 (e.g., one or more communication chips). For example, the communication chip 712 may be configured for managing wireless communications for the transfer of data to and from the computing device 700. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 712 may implement any of a number of wireless standards or protocols, including but not limited to Institute for Electrical and Electronic Engineers (IEEE) standards including Wi-Fi (IEEE 802.5 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 712 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 712 may operate in accordance with other wireless protocols in other embodiments. The computing device 700 may include an antenna 722 to facilitate wireless communications and/or to receive other wireless communications (such as AM or FM radio transmissions).

In some embodiments, the communication chip 712 may manage wired communications, such as electrical, optical, or any other suitable communication protocols (e.g., the Ethernet). As noted above, the communication chip 712 may include multiple communication chips. For instance, a first communication chip 712 may be dedicated to shorter-range wireless communications such as Wi-Fi or Bluetooth, and a second communication chip 712 may be dedicated to longer-range wireless communications such as global positioning system (GPS), EDGE, GPRS, CDMA, WiMAX, LTE, EV-DO, or others. In some embodiments, a first communication chip 712 may be dedicated to wireless communications, and a second communication chip 712 may be dedicated to wired communications.

The computing device 700 may include battery/power circuitry 714. The battery/power circuitry 714 may include one or more energy storage devices (e.g., batteries or capacitors) and/or circuitry for coupling components of the computing device 700 to an energy source separate from the computing device 700 (e.g., AC line power).

The computing device 700 may include a display device 706 (or corresponding interface circuitry, as discussed above). The display device 706 may include any visual indicators, such as a heads-up display, a computer monitor, a projector, a touchscreen display, a liquid crystal display (LCD), a light-emitting diode display, or a flat panel display, for example.

The computing device 700 may include an audio output device 708 (or corresponding interface circuitry, as discussed above). The audio output device 708 may include any device that generates an audible indicator, such as speakers, headsets, or earbuds, for example.

The computing device 700 may include an audio input device 718 (or corresponding interface circuitry, as discussed above). The audio input device 718 may include any device that generates a signal representative of a sound, such as microphones, microphone arrays, or digital instruments (e.g., instruments having a musical instrument digital interface (MIDI) output).

The computing device 700 may include a GPS device 716 (or corresponding interface circuitry, as discussed above). The GPS device 716 may be in communication with a satellite-based system and may receive a location of the computing device 700, as known in the art.

The computing device 700 may include another output device 710 (or corresponding interface circuitry, as discussed above). Examples of the other output device 710 may include an audio codec, a video codec, a printer, a wired or wireless transmitter for providing information to other devices, or an additional storage device.

The computing device 700 may include another input device 720 (or corresponding interface circuitry, as discussed above). Examples of the other input device 720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 700 may be any other electronic device that processes data.

## *Selected Examples*

The following paragraphs provide various examples of the embodiments disclosed herein.

Example 1 provides a method including receiving an audio input; generating, at an audio encoder, a plurality of audio tokens based on the audio input; comparing a selected audio token of the plurality of audio tokens to an audio trigger; generating a similarity score based on the comparison; determining that the similarity score is above a selected threshold; and transmitting the plurality of audio tokens to a multimodal large language model (LLM).

Example 2 provides the method of example 1, further including bypassing multimodal LLM inference until the similarity score is above the selected threshold.

Example 3 provides the method of example 1, further including configuring the audio trigger at an enrollment model, where the audio trigger is configured based on text input to the enrollment model.

Example 4 provides the method of example 1, where comparing the selected audio token and the audio trigger and generating the similarity score further includes inputting the selected audio token and the audio trigger to a detection head, where the detection head is a neural network, and where the detection head outputs the similarity score.

Example 5 provides the method of example 4, where comparing the selected audio token and the audio trigger at the detection head includes using the audio trigger to generate weights for the neural network.

Example 6 provides the method of example 5, where generating the similarity score includes determining a dot product between the selected audio token and the weights and normalizing the dot product.

Example 7 provides the method of example 1, further including performing multimodal LLM inference on the transmitted plurality of audio tokens.

Example 8 provides one or more non-transitory computer-readable media storing instructions executable to perform operations, the operations including receiving an audio input; generating, at an audio encoder, a plurality of audio tokens based on the audio input; comparing a selected audio token of the plurality of audio tokens to an audio trigger; generating a similarity score based on the comparison; determining that the similarity score is above a selected threshold; and transmitting the plurality of audio tokens to a multimodal large language model (LLM).

Example 9 provides the one or more non-transitory computer-readable media of example 8, the operations further including bypassing multimodal LLM inference until the similarity score is above the selected threshold.

Example 10 provides the one or more non-transitory computer-readable media of example 8, the operations further including configuring the audio trigger at an enrollment model, where the audio trigger is configured based on text input to the enrollment model.

Example 11 provides the one or more non-transitory computer-readable media of example 8, where comparing the selected audio token and the audio trigger and generating the similarity score further includes inputting the selected audio token and the audio trigger to a detection head, where the detection head is a neural network, and where the detection head outputs the similarity score.

Example 12 provides the one or more non-transitory computer-readable media of example 11, where comparing the selected audio token and the audio trigger at the detection head includes using the audio trigger to generate weights for the neural network.

Example 13 provides the one or more non-transitory computer-readable media of example 12, where generating the similarity score includes determining a dot product between the selected audio token and the weights, and normalizing the dot product.

Example 14 provides the one or more non-transitory computer-readable media of example 8, further including performing multimodal LLM inference on the transmitted plurality of audio tokens.

Example 15 provides an apparatus, including a computer processor for executing computer program instructions; and a non-transitory computer-readable memory storing computer program instructions executable by the computer processor to perform operations including receiving an audio input; generating, at an audio encoder, a plurality of audio tokens based on the audio input; comparing a selected audio token of the plurality of audio tokens to an audio trigger; generating a similarity score based on the comparison; determining that the similarity score is above a selected threshold; and transmitting the plurality of audio tokens to a multimodal large language model (LLM).

Example 16 provides the apparatus of example 15, the operations further including bypassing multimodal LLM inference until the similarity score is above the selected threshold.

Example 17 provides the apparatus of example 15, the operations further including configuring the audio trigger at an enrollment model, where the audio trigger is configured based on text input to the enrollment model.

Example 18 provides the apparatus of example 15, where comparing the selected audio token and the audio trigger and generating the similarity score further includes inputting the selected audio token and the audio trigger to a detection head, where the detection head is a neural network, and where the detection head outputs the similarity score.

Example 19 provides the apparatus of example 18, where comparing the selected audio token and the audio trigger at the detection head includes using the audio trigger to generate weights for the neural network.

Example 20 provides the apparatus of example 19, where generating the similarity score includes determining a dot product between the selected audio token and the weights, and normalizing the dot product.

Example 21 provides the method of example 1 wherein the audio tokens are acoustic embeddings.

Example 22 provides the method of example 1, further comprising transmitting at least one of text tokens and image tokens to the multimodal LLM, wherein the text tokens are based on input text and wherein the image tokens are generated by an image encoder based on input images.

Example 23 provides the method of example 3, wherein the enrollment model is a transformer model.

Example 24 provides the method of example 3, further comprising determining, at the enrollment model, embeddings of text based on the text input.

Example 25 provides the method of example 1, wherein transmitting the plurality of audio tokens further comprises closing a switch to couple the audio encoder output with the multimodal LLM.

Example 26 provides the method of example 2, wherein bypassing multimodal LLM inference includes maintaining a switch in an open state preventing transmission of the plurality of audio tokens.

Example 27 provides the method of example 2, further comprising bypassing an image decoder until the similarity score is above the selected threshold.

Example 28 provides a method including receiving an audio input; generating, at an audio encoder, a plurality of audio tokens based on the audio input; comparing a selected audio token of the plurality of audio tokens to a representation of an audio trigger; generating a similarity score based on the comparison; determining that the similarity score is above a selected threshold; and transmitting the plurality of audio tokens to a multimodal large language model (LLM).

Example 29 provides the method of example 28, wherein the representation of the audio trigger is a latent representation of the audio trigger.

Example 30 provides the method of example 28, wherein the representation of the audio trigger is an embedding of the audio trigger.

Example 31 provides a method including receiving an audio input; generating, at an audio encoder, a plurality of audio tokens based on the audio input; comparing a selected audio token of the plurality of audio tokens to an embedding of an audio trigger; generating a similarity score based on the comparison; determining that the similarity score is above a selected threshold; and transmitting the plurality of audio tokens to a multimodal large language model (LLM).

Example 32 provides the method of example 1, wherein the similarity score is an audio similarity score, and further comprising receiving an image input; generating, at an image encoder, a plurality of image tokens based on the image input; comparing a selected image token of the plurality of image tokens to a representation of an image trigger; generating an image similarity score based on the comparison; determining that the image similarity score is above a selected image score threshold; and transmitting the plurality of image tokens to the multimodal LLM.

Example 33 provides the method of example 1, further comprising bypassing transmission of a plurality of image tokens to the multimodal LLM until the similarity score is above the selected threshold.

Example 34 provides a method comprising receiving an image input; generating, at an image encoder, a plurality of image tokens based on the image input; comparing a selected image token of the plurality of image tokens to a representation of an image trigger; generating an image similarity score based on the comparison; determining that the image similarity score is above a selected image score threshold; and transmitting the plurality of image tokens to the multimodal LLM.

Example 35 provides the method of example 34, further including bypassing multimodal LLM inference until the image similarity score is above the selected image score threshold.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A method comprising:

   receiving an audio input;
   generating, at an audio encoder, a plurality of audio tokens based on the audio input;
   comparing a selected audio token of the plurality of audio tokens to a representation of an audio trigger;
   generating a similarity score based on the comparing;
   determining that the similarity score is above a selected threshold; and
   transmitting the plurality of audio tokens to a multimodal large language model (LLM).

2. The method of claim 1, further comprising bypassing multimodal LLM inference until the similarity score is above the selected threshold.

3. The method of claims 1-2, further comprising configuring the audio trigger at an enrollment model, wherein the audio trigger is configured based on text input to the enrollment model, wherein configuring the audio trigger includes generating the representation of the audio trigger, and wherein the representation is a latent representation.

4. The method of claims 1-3, wherein comparing the selected audio token and the representation of the audio trigger and generating the similarity score further comprises inputting the selected audio token and the representation of the audio trigger to a detection head, wherein the detection head is a neural network, and wherein the detection head outputs the similarity score.

5. The method of claim 4, wherein comparing the selected audio token and the representation of the audio trigger at the detection head includes using the representation of the audio trigger to generate weights for the neural network.

6. The method of claim 5, wherein generating the similarity score includes determining a dot product between the selected audio token and the weights and normalizing the dot product.

7. The method of claims 1-6, further comprising performing multimodal LLM inference on the transmitted plurality of audio tokens.

8. The method of claims 1-7, wherein the similarity score is an audio similarity score, and further comprising:

   receiving an image input;
   generating, at an image encoder, a plurality of image tokens based on the image input;
   comparing a selected image token of the plurality of image tokens to a representation of an image trigger;
   generating an image similarity score based on the comparing;
   determining that the image similarity score is above a selected image score threshold; and
   transmitting the plurality of image tokens to the multimodal large language model (LLM).

9. The method of claims 1-8, further comprising bypassing transmission of a plurality of image tokens until the similarity score is above the selected threshold.

10. One or more non-transitory computer-readable media storing instructions executable to perform operations, the operations comprising:

receiving an audio input;
generating, at an audio encoder, a plurality of audio tokens based on the audio input;
comparing a selected audio token of the plurality of audio tokens to a representation of an audio trigger;
generating a similarity score based on the comparing;
determining that the similarity score is above a selected threshold; and
transmitting the plurality of audio tokens to a multimodal large language model (LLM).

11. The one or more non-transitory computer-readable media of claim 10, the operations further comprising bypassing multimodal LLM inference until the similarity score is above the selected threshold.

12. The one or more non-transitory computer-readable media of claims 10-11, the operations further comprising configuring the audio trigger at an enrollment model, wherein the audio trigger is configured based on text input to the enrollment model.

13. The one or more non-transitory computer-readable media of claims 10-12, wherein comparing the selected audio token and the audio trigger and generating the similarity score further comprises inputting the selected audio token and the audio trigger to a detection head, wherein the detection head is a neural network, and wherein the detection head outputs the similarity score.

14. The one or more non-transitory computer-readable media of claim 13, wherein comparing the selected audio token and the audio trigger at the detection head includes using the audio trigger to generate weights for the neural network.

15. An apparatus, comprising:

a computer processor for executing computer program instructions; and
a non-transitory computer-readable memory storing computer program instructions executable by the computer processor to perform operations comprising:

receiving an audio input;
generating, at an audio encoder, a plurality of audio tokens based on the audio input;
comparing a selected audio token of the plurality of audio tokens to a representation of an audio trigger;
generating a similarity score based on the comparison;
determining that the similarity score is above a selected threshold; and
transmitting the plurality of audio tokens to a multimodal large language model (LLM).

FIG. 1

FIG. 2A

**FIG. 2B**

202

DESCRIPTION OF USER-DEFINED SOUND 205

ENROLLMENT MODEL 210

215

AUDIO ENCODER 220

235

TEXT TOKENIZER 225

225

IMAGE ENCODER 230

DESCRIPTION OF USER-DEFINED IMAGE/VIDEO 206

ENROLLMENT MODEL 211

245

255

MULTIMODAL LLM 250

DECODER 270

222

242

232

227

247

237

240

241

FIG. 2C

FIG. 2D

**FIG. 3**

EP 4 718 321 A1

```
┌─────────────────────────────────────────────────────────────────────┐
│            CONFIGURE AUDIO TRIGGER AT AN ENROLLMENT MODEL             │
│                                 410                                   │
└─────────────────────────────────────────────────────────────────────┘
```

```
┌─────────────────────────────────────────────────────────────────────┐
│       RECEIVE AUDIO INPUT AT AN AUDIO ENCODER AND GENERATE AN AUDIO TOKEN       │
│                                 420                                   │
└─────────────────────────────────────────────────────────────────────┘
```

```
┌─────────────────────────────────────────────────────────────────────┐
│      COMPARE THE AUDIO TRIGGER TO THE AUDIO TOKEN AND GENERATE A SIMILARITY SCORE       │
│                                 430                                   │
└─────────────────────────────────────────────────────────────────────┘
```

IS THE SIMILARITY SCORE
ABOVE A SELECTED THRESHOLD?
440

NO

YES

```
┌─────────────────────────────────────────────────────────────────────┐
│            TRANSMIT AUDIO INPUT TO A MULTIMODAL LLM FOR PROCESSING              │
│                                 450                                   │
└─────────────────────────────────────────────────────────────────────┘
```

**FIG. 4**

EP 4 718 321 A1

**FIG. 5**

EP 4 718 321 A1

**FIG. 6**

EP 4 718 321 A1

EP 4 718 321 A1

# COMPUTING DEVICE
## 700

| | |
|---|---|
| PROCESSING DEVICE<br>702 | COMMUNICATION CHIP<br>712 |
| MEMORY<br>704 | BATTERY/POWER<br>714 |
| DISPLAY DEVICE<br>706 | GPS DEVICE<br>716 |
| VIDEO OUTPUT DEVICE<br>708 | VIDEO INPUT DEVICE<br>718 |
| OTHER OUTPUT DEVICE<br>710 | OTHER INPUT DEVICE<br>720 |

ANTENNA

722

**FIG. 7**

Europäisches
Patentamt
European
Patent Office
Office européen
des brevets

## EUROPEAN SEARCH REPORT

**Application Number**

EP 25 18 9818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAOYOU FU ET AL: "VITA: Towards Open-Source Interactive Omni Multimodal LLM", ARXIV.ORG, CORNELL UNIVERSITY LIBRARY, 201 OLIN LIBRARY CORNELL UNIVERSITY ITHACA, NY 14853, 9 August 2024 (2024-08-09), XP091849169, * abstract * * figure 2 * | 1-15 | INV. G06N3/045 G06N3/0455 G06N3/0475 G10L15/16 G10L25/30 G10L25/51 |
| A | Gilbert Sébastien: "Build a Locally Running Voice Assistant", , 29 December 2023 (2023-12-29), pages 1-13, XP093349339, Medium Retrieved from the Internet: URL:https://medium.com/data-science/build-a-locally-running-voice-assistant-2f2ead904fe9 [retrieved on 2025-12-19] * flowchart on page 3 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 5 January 2026 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)